# EUROPÄISCHE PATENTSCHRIFT

(11) **EP 2 569 122 B1**
(45) Veröffentlichungstag und Bekanntmachung des Hinweises auf die Patenterteilung: **25.12.2013**
(21) Anmeldenummer: 11718949.8
(22) Anmeldetag: 03.05.2011
(51) Int. Cl.: B23K 26/03, B23K 26/38

(54) **LASERSCHNEIDKOPF UND VERFAHREN ZUM SCHNEIDEN EINES WERKSTÜCKS MITTELS EINES LASERSCHNEIDKOPFES**
LASER CUTTING HEAD AND METHOD OF CUTTING A WORKPIECE USING THE LASER CUTTING HEAD
TÊTE DE DÉCOUPE AU LASER ET MÉTHODE DE DÉCOUPE À L'AIDE DE LA TÊTE DE DÉCOUPE AU LASER

(30) Priorität: 11.05.2010 DE 102010020183
(43) Veröffentlichungstag der Anmeldung: 20.03.2013
(73) Patentinhaber: Precitec GmbH & CO. KG, 76571 Gaggenau-Bad Rotenfels (DE)
(72) Erfinder: SCHÜRMANN, Bert, 76593 Gernsbach (DE); STORK gennant WERSBORG, Ingo, 80799 München (DE)
(74) Vertreter: Ter Meer Steinmeister & Partner
(86) Internationale Anmeldenummer: PCT/EP2011/002211
(87) Internationale Veröffentlichungsnummer: WO 2011/141135

(56) Entgegenhaltungen:
- WO-A1-2008/028580
- DE-A1- 19 716 293
- US-A- 5 589 090

## Beschreibung

Die Erfindung betrifft eine Vorrichtung oder einen Laserschneidkopf zum Schneiden eines Werkstücks mittels eines Arbeitslaserstrahls sowie ein Verfahren zum Schneiden eines Werkstücks mittels eines Laserschneidkopfes.

Das Laserstrahlschneiden hat sich in den letzten Jahren in der Fertigungsindustrie zu einem Standardverfahren entwickelt. Bei einem Laserstrahlschneidprozess wird an einer Stelle, wo ein fokussierter Laserstrahl auf ein Werkstück trifft, das Material des Werkstücks, welches in der Regel ein Metall ist, so stark erwärmt, dass es schmilzt oder verdampft. Sobald der Laserstrahl das Werkstück vollständig durchdrungen hat, kann der Schneidprozess beginnen. Der Laserstrahl bewegt sich entlang einer Teilekontur und schmilzt das Material fortlaufend auf. Die Schmelze wird meist von einem Gasstrom nach unten aus der Schnittfuge geblasen. Dadurch entsteht ein enger Schnittspalt zwischen Teil- und Restgitter. Der Schnittspalt ist kaum breiter als der fokussierte Laserstrahl selbst. Im Falles des Lasersublimierschneidens ist die eingebrachte Laserleistung so groß, dass das Material vollständig verdampft, und somit kein Material mehr aus dem Schnittspalt ausgeblasen werden muss.

Es wird unterschieden zwischen zwei Standardverfahren des Laserstrahlschneidens, dem Brennschneiden und dem Schmelzschneiden. Das Brennschneiden wird überwiegend für das Schneiden von Baustahl verwendet, wobei hier Sauerstoff als Schneidgas eingesetzt wird. Der Sauerstoff reagiert mit dem erwärmten Metall, wobei es verbrennt und oxidiert. Die chemische Reaktion setzt hierbei Energie frei, die bis zum Fünffachen der Laserenergie reicht und den Laserstrahl unterstützt. Somit kann mit diesem Verfahren Baustahl mit Dicken bis über 30 mm geschnitten werden. Aufgrund des Verbrennungsvorganges entstehen jedoch Schnittkanten, welche einerseits oxidiert sind und andererseits eine raue Oberfläche aufweisen können. -

Im Gegensatz dazu wird bei dem zweiten Standardverfahren, dem Schmelzschneiden, als Schneidgas Stickstoff oder Argon eingesetzt. Bei diesem Verfahren wird mit Drücken zwischen typisch 2 und 20 bar das Schneidgas durch die Schnittfuge getrieben. Argon ist ein inertes Gas. Das heißt, es reagiert nicht mit dem aufgeschmolzenen Metall im Schnittspalt, sondern bläst es nur nach unten aus. Gleichzeitig schirmt es die Schnittkante von der Luft ab. Als Schneidgas kann für fast alle Metalle auch Stickstoff verwendet werden. Die einzige Ausnahme bildet Titan, das sowohl mit Sauerstoff als auch mit Stickstoff heftig reagiert, daher wird es mit Argon geschnitten. Das Schmelzschneiden hat den großen Vorteil, dass die Kanten oxidfrei bleiben und nicht mehr nachbearbeitet werden müssen. Allerdings steht zum Schneiden allein die Energie des Laserstrahls zur Verfügung, weshalb die Schneidgeschwindigkeiten nur in dünnen Blechen so hoch wie beim Brennschneiden sind.

Für den Einsatz in Laserstrahlschneidvorgängen werden üblicherweise CO₂-Laser, Diodenlaser, Nd:YAG-Laser, Festkörperlaser oder Faserlaser eingesetzt. Ein Faserlaser ist eine spezielle Form des Festkörperlasers, wobei ein dotierter Kern einer Glasfaser das aktive Medium bildet. Der Faserlaser weist an seinen Endflächen Spiegel auf, die einen Resonator bilden und somit einen kontrollierten Laserbetrieb ermöglichen. Diese Spiegelflächen bestehen aus mit UV-Licht in die Glaserfaser einbeschriebenen Brechzahlveränderungen, den sogenannten Faser-Bragg-Gittern. Somit entstehen an diesen Gittern keine zusätzlichen Kopplungsverluste, wobei diese Gitter nur die gewünschten Wellenlängen selektiv reflektieren. Als Dotierungselement für den laseraktiven Faserkern wird Erbium am häufigsten verwendet, gefolgt von Ytterbium und Neodym. Die Wellenlängen des Laserlichts unterscheiden sich kaum, sie liegen bei 1,06 µm (Neodym) und 1,03 µm (Ytterbium). Ein großer Vorteil dieser Faserlaser ist, dass die emittierte Lichtwellenlänge vom Glas nur sehr gering absorbiert wird, das emittierte Laserlicht kann also mittels einer Glasfaser von der Laservorrichtung zu einem angeschlossenen Laserschneidkopf geleitet werden.

In bekannten Laserstrahlschneidprozessen wird die optische Emission des durch das Auftreffen des Arbeitslaserstrahls auf das Werkstück erzeugten Materialdampfes oder Plasmas untersucht, um die Qualität des Schnittvorgangs zu überwachen. So sind beispielsweise eine Veränderung des Emissionsspektrums oder die Intensität des Plasmaleuchtens Indikatoren für einen guten oder schlechten Laserschneidvorgang. Darüber hinaus kann das bei dem Schneidprozess entstehende Materialplasma des zu schneidenden Werkstücks auch kapazitiv durch den in der Regel integral mit der Schneiddüse ausgebildeten Abstandsensor erfasst und ausgewertet werden. Bei der optischen Auswertung des Laserschneidvorgangs werden Photodioden eingesetzt, welche das Prozessleuchten nicht ortsaufgelöst auffangen und auswerten.

Die DE 198 52 302 A1 beschreibt ein Verfahren und eine Vorrichtung zum Bearbeiten von Werkstücken mit Hochenergiestrahlung. Hierbei erfolgt eine Überwachung einer in einem Werkstück erzeugten Schweißnaht mittels einer Lichtlinie, die auf das Werkstück projiziert wird, wobei unterschiedliche Nahtgeometrien, beispielsweise Kerben, Nahtüberhöhungen, Nahtüberwölbungen oder -löcher, zu unterschiedlichen Lichtverläufen führen. Die Lichtschnittvorrichtung projiziert hierbei einen kegelmantelförmigen Lichtfächer auf das Werkstück, wobei die kreisförmige Lichtlinie um den Bearbeitungsstrahl herum angeordnet ist. Zur Messung der Lichtlinie können Spezialfilter eingesetzt werden, deren Transmissionsrate von innen nach außen ansteigt. Somit dringt nahe dem Radiusmittelpunkt nur wenig Licht durch, schirmt also die aus der Bearbeitungszone herrührende helle Lichtstrahlung ab, während bei großen Radien eine höhere Transmissionsrate vorliegt, so dass auch vergleichsweise dunkles Messlicht erfasst werden kann. Darüber hinaus können Farbfilter eingesetzt werden, deren Transmissionsrate für unterschiedliche Wellenlängen des Lichts in Abhängigkeit des Radius unterschiedlich groß ist.

Die DE 10 2004 041 935 A1 beschreibt eine Vorrichtung zur Beobachtung eines Laserbearbeitungsprozesses, sowie eine Vorrichtung zur Regelung des Laserbearbeitungsprozesses. Bei einem Laserbearbeitungsprozess wird ein Arbeitslaserstrahl mittels eines Fokussierspiegels in einer Wechselwirkungszone auf einem Werkstück fokussiert. Um eine qualitativ gute Abbildung der Oberfläche eines Werkstücks im Bereich der Wechselwirkungszone koaxial durch den Strahlengang zu ermöglichen, umfasst die Vorrichtung eine strahlungsempfindliche Empfängeranordnung und einen Beobachtungsspiegel, der aus einem Bereich der Wechselwirkungszone kommende, aus einem Arbeitsstrahlengang ausgekoppelte Strahlung auf die Empfängeranordnung lenkt, wobei der Beobachtungsspiegel im Wesentlichen die gleichen Abbildungseigenschaften besitzt wie der Fokussierspiegel.

Die DE 10 2005 024 085 A1 beschreibt eine Vorrichtung zur Überwachung eines Laserbearbeitungsvorgangs und einen Laserbearbeitungskopf. Um die Qualität eines Bearbeitungsvorgangs prozessunabhängig zu erfassen, umfasst eine Überwachungsvorrichtung eine strahlungsempfindliche Empfängeranordnung mit einem strahlungsempfindlichen Empfänger und einer Kamera zur Erfassung von Strahlung aus einem Bereich einer Wechselwirkungszone zwischen einem Laserstrahl und einem Werkstück. Die Vorrichtung umfasst weiter eine Abbildungsvorrichtung, die einen zu beobachtenden Bereich aus dem Bereich der Wechselwirkungszone auf die Empfängeranordnung abbildet, und eine Auswerteschaltung, der Ausgangsignale des strahlungsempfindlichen Empfängers und der Kamera zeitgleich zugeführt werden und die die empfangenen Ausgangssignale der Empfängeranordnung verarbeitet, um ihrerseits Ausgangssignale zu liefern, die den Verlauf des Laserbearbeitungsvorganges charakterisieren.

Die DE 101 20 251 A1 beschreibt ein Verfahren und eine Sensorvorrichtung zur Überwachung eines an einem Werkstück durchzuführenden Laserbearbeitungsvorgangs sowie einen Laserbearbeitungskopf mit einer derartigen Sensorvorrichtung. Beim Verfahren zur Überwachung eines an einem Werkstück durchzuführenden Laserbearbeitungsvorganges wird zur Qualitätssicherung mit einer ortsauflösenden Empfängeranordnung ein bestimmtes Beobachtungsfeld im Bereich der Wechselwirkungszone zwischen Laserstrahl und Werkstück ausgewählt. Die aus dem ausgewählten Beobachtungsfeld kommende Strahlung wird mit einem strahlungsempfindlichen Empfänger, der ein der erfassten Strahlung entsprechendes elektrisches Signal liefert, erfasst und das elektrische Signal wird in einer Signalverarbeitungsschaltung gefiltert, um schnelle und/oder kurze, störungsbedingte Intensitätsänderungen der erfassten Strahlung festzustellen, wodurch Störungen des Laserbearbeitungsvorgangs erkannt werden können.

Die DE 3926859 A1 beschreibt ein Verfahren und eine Vorrichtung zum Bearbeiten von Werkstücken mittels Laserstrahlung. Um ein gesteuertes Verfahren ohne Überschreitung einer kritischen Temperatur, z. B. der Verdampfungstemperatur des Werkstückmaterials, auf einfache Weise zu erreichen, wird mit einem Strahlungsdetektor die von einer Bearbeitungsstelle ausgehende Wärmestrahlung gemessen, mit der eine obere Temperatur als Obergrenzwert eines vorbestimmten Temperaturbereichs und eine untere Temperatur als Untergrenzwert dieses Temperaturbereichs überwacht werden. Des weiteren wird die Laserstrahlung bei Erreichen des oberen Grenzwertes abgeschaltet und bei Erreichen des unteren Grenzwertes wieder eingeschaltet.

Die WO 2009/047350 A1 beschreibt ein System und ein Verfahren zur Überwachung eines Laserbohrverfahrens. Dieses System umfasst eine Beleuchtungsquelle und eine Verarbeitungseinheit. Die Beleuchtungsquelle beleuchtet einen Bohrbereich eines Werkstücks, welches mit der Laserbohrvorrichtung bearbeitet werden soll und fängt Licht von der Beleuchtungsquelle auf, welches von dem Bohrbereich während des Bohrprozesses reflektiert wird. Durch das Auffangen des reflektierten Lichtes kann die Verarbeitungseinheit den Zeitpunkt bestimmen, wann der Bohrvorgang beendet ist. Zum Auffangen des von dem Werkstück reflektierten Lichts wird eine CCD- oder CMOS-Kamera eingesetzt. Die Beleuchtungsvorrichtung ist seitlich neben dem Laserbohrkopf angeordnet, um das Bohrloch zu beleuchten.

Die DE 10 2005 010 381 A1 betrifft ein Verfahren zur Vermessung von Phasengrenzen eines Werkstoffes bei der Bearbeitung eines Werkstücks mit einem Bearbeitungsstrahl, insbesondere mit einem Laserstrahl, sowie eine Vorrichtung, die zur Durchführung des Verfahrens ausgebildet ist. Bei dem Verfahren wird während der Bearbeitung eine den Auftreffort des Bearbeitungsstrahls auf dem Werkstück umfassende Bearbeitungszone zusätzlich zumindest annähernd koaxial zum Bearbeitungsstrahl mit optischer Strahlung beleuchtet. Von der Bearbeitungszone reflektierte Strahlung wird parallel oder unter einem kleinen Winkel zu einer Einfallsrichtung der optischen Strahlung mit einem optischen Detektor ortsaufgelöst erfasst, um ein optisches Reflexionsmuster der Bearbeitungszone zu erhalten. Aus dem optischen Reflexionsmuster wird dann ein Verlauf ein oder mehrerer Phasengrenzen in der Bearbeitungszone bestimmt.

Die US 5,589,090 A beschreibt eine Laserschneidvorrichtung mit Mitteln zum Messen einer Schnittspaltenbreite. Eine Laserschneidvorrichtung, die während der Produktion von Verpackungsschachteln eingesetzt wird, umfasst eine Abstandsanpassungsvorrichtung zwischen einem Werkstück und einer Laserkondensorlinse zum Anpassen der Breite eines Laserstrahls, der auf das Werkstück einwirkt. Weiter ist ein Relativgeschwindigkeitsregulator vorgesehen, der die Relativgeschwindigkeit des Werkstücks in Bezug auf den Laserstrahl steuert, um die Bestrahlungszeit des Laserstrahls auf das Werkstück zu regeln. Eine Schnittbreitenmessvorrichtung ist ferner zum Messen der Schnittbreiten des oberen Abschnitts und des unteren Abschnitts des Schnittspalts vorgesehen, wobei eine Steuervorrichtung die gemessene Schnittbreite des Schnittspalts mit einem Standardwert vergleicht und die Abstandsanpassvorrichtung und den Relativgeschwindigkeitsregulator in Abhängigkeit des Vergleichsresultats steuert. Zur Detektion der Schnittbreite des Schnittspalts sind optische Sensoreinheiten vorgesehen, die koaxial in den Arbeitslaserstrahlengang zur Beobachtung des Schnittspalts eingekoppelt und mit der Steuereinheit verbunden sind, um durch Verarbeitung der Bilddaten die Schnittspaltbreite zu ermitteln.

Die DE 197 16 293 A1 beschreibt eine Vorrichtung zur Regelung von Schweißparametern beim Laserstrahlschweißen. Hierbei wird eine Vorrichtung zur Regelung von Schweißparametern beim Laserstrahlschweißen vorgeschlagen, die eine CCD-Kamera zur Detektion der Geometrie eines beim Schweißprozess gebildeten Schmelzbades umfasst, wobei die Kamera an eine bilddatenverarbeitende Einheit angeschlossen ist. Erfindungsgemäß erfolgt die Regelung der Einschweißtiefe in Abhängigkeit der detektierten Schmelzbadlänge oder Schmelzbadfläche, eine Regelung der Fokuslage des Laserstrahls in Abhängigkeit eines geometrischen Ähnlichkeitsfaktors, der sich als Quotient der Schmelzbadfläche und dem Abstand zwischen den geometrischen Schwerpunkten des Laserstrahl-Keyholes und der Schmelzbadfläche berechnet. Erfindungsgemäß ist des weiteren eine Detektion und Regelung von Spalten zwischen den Werkstücken von Höhenversatz zwischen den Werkstücken und/oder lateralem Versatz des Laserstrahls möglich.

Die WO 2008/028580 A1 beschreibt ein Verfahren und eine Vorrichtung zur optischen Beurteilung der Schweißqualität beim Schweißen. Hierbei wird bei der Laserschweißung koaxial zum Laserstrahl durch die Laseroptik hindurch der Schweißbereich abgebildet, wobei sowohl eine Triangulationslinie und ein Grau- oder Farbbild der erstarrten Schweißnaht als auch das prozessleuchten des Schweißprozesses aufgenommen wird. Aus diesen drei Bildelementen kann eine optimale Qualitätsbeurteilung des Schweißprozesses und der Schweißnaht erfolgen.

Der Erfindung liegt die Aufgabe zugrunde, eine Vorrichtung oder einen Laserschneidknopf zum Schneiden eines Werkstücks mittels eines Arbeitslaserstrahls sowie ein Verfahren zum Schneiden eines Werkstücks mittels einer Vorrichtung oder eines Laserschneidkopfes zu schaffen, durch welche die Schnittqualität eines Laserschneidprozesses erhöht werden kann.

Diese Aufgabe wird durch die Vorrichtung nach Anspruch 1 sowie durch das Verfahren nach Anspruch 15 gelöst. Vorteilhafte Ausgestaltungen und Weiterbildungen der Erfindung werden in den Unteransprüchen dargelegt.

Erfindungsgemäß ist eine Vorrichtung oder ein Laserschneidkopf zum Schneiden eines Werkstücks mittels eines Arbeitslaserstrahls vorgesehen, mit einem Gehäuse, durch das ein Strahlengang für den Arbeitslaserstrahl hindurchgeführt ist und das eine Fokussieroptik zum Fokussieren des Arbeitslaserstrahls auf das zu schneidende Werkstück innerhalb eines Arbeitsbereichs aufweist, einer Beleuchtungsvorrichtung mit einer Lichtquelle zur inkohärenten Beleuchtung des Arbeitsbereichs des zu schneidenden Werkstücks, einer koaxial in den Arbeitslaserstrahlengang eingekoppelten Kamera zur Beobachtung des Arbeitsbereichs des zu schneidenden Werkstücks, wobei in dem Beobachtungsstrahlengang vor der Kamera ein optischer Filter angeordnet ist, welcher für den Arbeitslaserstrahl im Wesentlichen undurchlässig ist, und einer Verarbeitungseinheit, die dazu ausgebildet ist, Bilddaten von der Kamera zu verarbeiten, um die Geometrie eines in dem Werkstück durch den Arbeitslaserstrahl erzeugten Schnittspaltes und die Qualität desselben zu bestimmen, wobei der optische Filter ein optischer Bandpassfilter ist und die Lichtquelle der Beleuchtungsvorrichtung so beschaffen ist, dass diese ein zumindest lokales Abstrahlmaximum im Wellenlängendurchlassbereich des Bandpassfilters aufweist, um eine Aufnahme eines Graubildes des Arbeitsbereichs durch die Kamera zu ermöglichen, bei dem sowohl Reflexionen durch den Arbeitslaserstrahl als auch Emissionen des Materialdampfes des Werkstücks minimiert sind.

Hierbei ist es von Vorteil, wenn die Verarbeitungseinheit dazu ausgebildet ist, Bilddaten von der Kamera zu verarbeiten, um eine aktuelle Breite des Schnittspaltes zu bestimmen.

Erfindungsgemäß ist weiter eine Vorrichtung oder ein Laserschneidkopf zum Schneiden eines Werkstücks mittels eines Arbeitslaserstrahls vorgesehen, welche oder welcher ein Gehäuse, durch das ein Strahlengang für den Arbeitslaserstrahl hindurchgeführt ist und das eine Fokussieroptik zum Fokussieren des Arbeitslaserstrahls auf das zu schneidende Werkstück innerhalb eines Arbeitsbereichs aufweist, eine Beleuchtungsvorrichtung mit einer Lichtquelle zur Beleuchtung, insbesondere einer gleichmäßigen Beleuchtung, des Arbeitsbereichs des zu schneidenden Werkstücks, eine koaxial in den Arbeitslaserstrahlengang eingekoppelte Kamera zur Beobachtung des Arbeitsbereichs des zu schneidenden Werkstücks, wobei in dem Beobachtungsstrahlengang vor der Kamera ein optischer Filter angeordnet ist, welcher für den Arbeitslaserstrahl undurchlässig ist, und eine Verarbeitungseinheit umfasst, die dazu ausgebildet ist, Bilddaten von der Kamera zu verarbeiten, um die Breite eines in dem Werkstück durch den Arbeitslaserstrahl erzeugten Schnittspaltes zu bestimmen.

Es ist also eine Vorrichtung oder ein Laserschneidkopf zum Schneiden eines Werkstücks mittels eines Arbeitslaserstrahls vorgesehen, welche oder welcher einen Arbeitsbereich des Werkstücks, also den Bereich, in welchem der Arbeitslaserstrahl in der Wechselwirkungszone in das Werkstück eindringt und dieses durchdringt, um einen Schnittspalt zu erzeugen, mittels einer Beleuchtungsvorrichtung gleichmäßig ausleuchtet. Eine koaxial in den Arbeitslaserstrahl eingekoppelte Kamera fängt das von der Beleuchtungsvorrichtung erzeugte Licht, welches auf das Werkstück trifft, auf. Das aufgenommene Bild wird mittels einer Verarbeitungseinheit dahingehend ausgewertet, dass eine Breite des erzeugten Schnittspaltes bestimmt wird. Die Bestimmung der Schnittspaltbreite erfolgt vorzugsweise unmittelbar nach dem Erzeugen des Spaltes, also in einem Bereich von etwa 10 mm nach dem Auftreffpunkt bzw. Durchdringungspunkt des Arbeitslaserstrahls.

Durch die optische Bestimmung mittels einer ortsauflösenden Kamera der Schnittspaltbreite kann ein direkter Rückschluss auf die Qualität des Schnittspaltes gezogen werden. Darüber hinaus kann durch Vorgabe eines optimalen Schnittspaltbreitenwertes der Laserschneidvorgang auf diese vorgegebene Schnittspaltbreite geregelt werden, wodurch ein optimierter Laserschneidvorgang gewährleistet ist. Als Regelungsparameter können hierfür die Vorschubgeschwindigkeit, der Schneidgasdruck, die Fokuslage sowie die Laserstrahlleistung verwendet werden.

Aufgrund der koaxialen Einkoppelung der Kamera in den Laserstrahlengang erfolgt eine Beobachtung des Laserschneidvorganges direkt von oben in den Schnittspalt hinein, also senkrecht zur Werkstückoberfläche und parallel zum Arbeitslaserstrahl. Da das aufgeschmolzene Material im Wesentlichen parallel zum Arbeitslaserstrahl nach unten ausgeblasen wird, sind störende Lichtemissionen von dem erzeugten aufgeschmolzenen Material oder Materialdampf in einer Richtung koaxial zum Arbeitslaserstrahl, welche im Wesentlichen mit der Ausblasrichtung durch die Schneiddüse übereinstimmt, am geringsten. Somit können also durch die koaxiale Anordnung der Kamera, verbunden mit einem optischen Ausblenden der Wellenlänge des Arbeitslaserstrahls durch einen optischen Filter, sowohl störende Reflexionen durch den Arbeitslaserstrahl als auch störende Emissionen des Materialdampfes minimiert werden, wodurch erfindungsgemäß die Spaltbreite durch die Kamera aufgrund der Fremdbeleuchtung durch die Beleuchtungsvorrichtung bestimmt werden und für einen Regelungsvorgang des Laserschneidprozesses herangezogen werden kann.

Um das durch den Arbeitslaserstrahl aufgeschmolzene Material des Werkstücks nach unten aus dem Schnittspalt mittels eines Schneidgases heraus blasen zu können, ist es zweckmäßig, wenn die Vorrichtung oder der Laserschneidkopf eine Schneiddüse aufweist, durch welche der Arbeitslaserstrahl und der Beobachtungsstrahlengang der Kamera verlaufen und durch welche ein Schneidgas geleitet wird.

Für ein einfaches Nachführen des Beobachtungsstrahlengangs der Kamera hinsichtlich des Arbeitsbereiches des zu schneidenden Werkstücks ist es zweckmäßig, wenn die Vorrichtung oder der Laserschneidkopf einen ersten Strahlteiler aufweist, durch welchen der Beobachtungsstrahlengang der Kamera koaxial in den Laserstrahlengang einkoppelbar ist.

Für eine kompakte Anordnung der Beleuchtungsvorrichtung in der Vorrichtung oder dem Laserschneidkopf ist es zweckmäßig, wenn die Vorrichtung oder der Laserschneidkopf einen zweiten Strahlteiler aufweist, der im Beobachtungsstrahlengang zwischen dem erstem Strahlteiler und der Kamera angeordnet ist, durch welchen die Beleuchtung der Beleuchtungsvorrichtung koaxial in den Laserstrahlengang einkoppelbar ist.

Es ist jedoch auch vorstellbar, die Beleuchtungsvorrichtung an einer Außenseite des Gehäuses zu befestigen, um den Arbeitsbereich des Werkstücks gleichmäßig auszuleuchten.

Gemäß einer besonders bevorzugten Ausgestaltung der Erfindung ist die Lichtquelle der Beleuchtungsvorrichtung so ausgestaltet, dass deren emittierte Lichtstrahlung in einem sehr schmalen Wellenlängenbereich liegt, so dass diese Lichtquelle durch Einsatz eines optischen Bandpasses vor der Beobachtungskamera durch diese beobachtet werden kann, wodurch Störstrahlung beim Betrieb des Laserschneidkopfes nahezu eliminiert wird.

Für eine reale Umsetzung des optischen Bandpassfilters ist dieser zweckmäßigerweise ein Interferenzfilter, insbesondere ein Fabry-Perot-Filter, wobei die Halbwertsbreite des Wellenlängendurchlassbereiches kleiner als 50 µm, insbesondere kleiner als 20 µm ist.

Für eine einfache Umsetzung der Beleuchtung des Werkstücks ist es zweckmäßig, wenn die Lichtquelle der Beleuchtungsvorrichtung eine Xenonblitzlampe oder eine Quecksilberdampflampe ist.

Aufgrund der Möglichkeit der einfachen Anpassung einer Abstrahlwellenlänge ist es vorteilhaft, wenn die Lichtquelle der Beleuchtungsvorrichtung zumindest eine LED, insbesondere eine RCLED oder zumindest ein Laser ist.

Es ist jedoch auch vorstellbar, dass die Lichtquelle der Beleuchtungsvorrichtung zumindest einen Laser und an dessen Strahlausgangsseite einen zeitlich variierenden Diffusor aufweist, durch welchen das durch den Laser erzeugte Laserlicht läuft, um die Kohärenz des Laserlichts aufzulösen.

Darüber hinaus kann die Lichtquelle der Beleuchtungsvorrichtung eine Vielzahl von Lasern aufweisen, deren Laserlicht so überlagert wird, dass die resultierende Beleuchtung der Beleuchtungsvorrichtung inkohärentes Licht ergibt.

Die verwendete Kamera umfasst zweckmäßigerweise eine Bildaufnahmevorrichtung, welche zur Verarbeitung der Bilddaten mittels eines HDR-Verfahrens ausgebildet ist.

In einer erfindungsgemäßen Ausgestaltung der Vorrichtung oder des Laserschneidkopfes weist dieser ferner eine Steuerungseinheit auf, welche dazu ausgebildet ist, während eines Laserschneidprozesses Prozessparameter wie Schneidgasdruck oder Vorschubgeschwindigkeit des Laserschneidkopfes so einzustellen, dass die Breite des Schnittspaltes auf einen vorbestimmten Wert geregelt wird.

Erfindungsgemäß ist weiter ein Verfahren zum Laserstrahlschneiden eines Werkstücks vorgesehen, welches die erfindungsgemäße Vorrichtung oder den Laserschneidkopf einsetzt. Bei diesem Verfahren wird ein Graubild des Arbeitsbereiches des zu schneidenden Werkstücks mit der Kamera aufgenommen und die aktuelle Breite des Schnittspaltes in einem vorbestimmten Abstand von der Wechselwirkungszone zwischen Arbeitslaserstrahl und Werkstück durch eine Verarbeitungseinheit ermittelt.

Bei einem Einsatz für einen Regelungsprozess erfasst eine Steuerungseinheit Prozessparameter wie Schneidgasdruck, Vorschubgeschwindigkeit, Fokuslage und Laserstrahlleistung der Vorrichtung oder des Laserschneidkopfes und stellt diese Prozessparameter ein, um die aktuelle Breite des Schnittspaltes auf einen vorgegebenen Wert zu steuern oder zu regeln.

Die Erfindung wird im Folgenden anhand der Zeichnungen näher erläutert. Es zeigen:
Fig. 1 eine stark vereinfachte schematische Ansicht eines Laserschneidkopfes gemäß einem ersten Ausführungsbeispiel der Erfindung,
Fig. 2 eine stark vereinfachte perspektivische Teilansicht des Werkstücks während eines Laserschneidprozesses, und
Fig. 3 eine stark vereinfachte schematische Ansicht eines Laserschneidkopfes gemäß einem zweiten Ausführungsbeispiel der Erfindung.

In den verschiedenen Figuren der Zeichnungen sind einander entsprechende Bauelemente mit gleichen Bezugszeichen versehen.

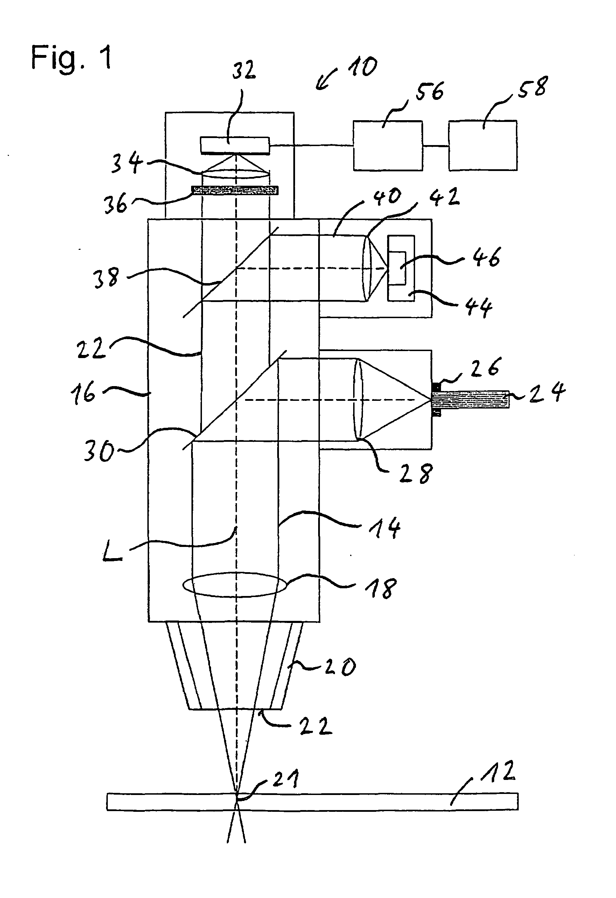

In Fig. 1 ist eine stark vereinfachte Ansicht eines Laserschneidkopfes 10 gemäß einem ersten Ausführungsbeispiel der Erfindung gezeigt, wie er mit Laserbearbeitungsmaschinen oder -anlagen verwendet wird.

Für das Schneiden des Werkstücks 12 wird ein von der Laserbearbeitungsmaschine kommender Arbeitslaserstrahl 14 durch ein Gehäuse 16 des Laserschneidkopfes 10 hindurch auf das Werkstück 12 gelenkt und mittels einer Fokussieroptik 18 durch eine Schneiddüse 20 hindurch auf das Werkstück 12 fokussiert, wie durch die optische Achse L angedeutet wird. Das in den Bereich des Werkstücks 12 fokussierte Laserlicht des Arbeitslaserstrahls 14 schmilzt Material in einer Wechselwirkungszone 21 in dem Werkstück 12 auf, das durch einen Prozessgasstrom, welcher durch die Schneiddüse 20 in Richtung des Werkstücks 12 geleitet wird, aus dem Werkstück 12 nach unten heraus geblasen wird. Die Abmessungen der Düse 20 sind übertrieben dargestellt, bei einer realen Umsetzung ist die Öffnung 22 der Schneiddüse 20 wesentlich näher an der Oberfläche des Werkstücks 12, um beispielsweise eine kapazitive Abstandsregelung durchzuführen und darüber hinaus einen entsprechenden Schneidgasdruck auf das Werkstück 12 ausüben zu können. Es ist jedoch auch vorstellbar, bei einem Sublimierschneidprozess, bei welchem das Material vollständig verdampft, keine Schneiddüse einzusetzen.

Der Arbeitslaserstrahl 14 wird dem Laserschneidkopf 10 durch eine Lichtleitfaser 24 zugeführt, wobei das Faserende der Lichtleitfaser 24 in einer Faserhalterung 26 gehalten ist. Der bei dem Faserende der Lichtleitfaser 24 austretende Laserstrahl 14 wird mittels einer Kollimatoroptik 28 kollimiert und auf einen ersten Strahlteiler 30 gelenkt, welcher den Laserstrahl 14 in Richtung der Fokussieroptik 18 umlenkt.

Die Anordnung der Kollimatoroptik 28 und der Lichtleitfaser 24 zu der Fokussieroptik 18 ist jedoch nicht auf das in Fig. 1 gezeigte Beispiel beschränkt, es ist auch möglich, dass der von der Kollimatoroptik 28 aufgeweitete Laserstrahl 14 gerade entlang der optischen Achse L auf die Fokussieroptik 18 zuläuft. In diesem Fall ist der Strahlteiler 30 so ausgebildet, dass er einen Großteil der auf ihn treffenden Laserstrahlung durchlässt (in diesem Fall sind die Komponenten zum Beleuchten und Beobachten des Werkstücks 12 an der Stelle angeordnet, an welcher in Fig. 1 die Kollimatoroptik 28 montiert ist), wohingegen im erst beschriebenen Fall der Strahlteiler 30 einen Großteil der auf ihn auftreffenden Strahlung reflektiert. Der erste Strahlteiler 30 kann auch ein dichroitischer Spiegel sein, welcher so auf die Wellenlänge des Arbeitslaserstrahls 14 abgestimmt ist, das er den Arbeitslaserstrahl 14 im Wesentlichen voll reflektiert und für einen restlichen Wellenlängenbereich im Wesentlichen durchlässig ist. Somit kann der erste Strahlteiler 30 als optischer Filter fungieren, welcher den Arbeitslaserstrahl 14 in den Beobachtungsstrahlengang 22 nicht durchlässt.

Der erste Strahlteiler 30 ist im Durchgangsbereich des Arbeitslaserstrahls 14 im Gehäuse des Laserschneidkopfes 10 so angeordnet, dass ein Beobachtungsstrahlengang 22 (angedeutet durch seine optische Achse) einer Kamera 32 koaxial in den Strahlengang des Arbeitslaserstrahls 14 eingekoppelt wird. Im Beobachtungsstrahlengang 22 ist vor der Kamera 32 eine Abbildungsoptik 34 sowie ein optischer Bandpassfilter 36 angeordnet, welcher im Folgenden noch genauer beschrieben werden wird.

Im Beobachtungsstrahlengang 22 ist zwischen dem ersten Strahlteiler 30 und dem optischen Bandpassfilter 36 noch ein zweiter Strahlteiler 38 angeordnet, durch welchen ein Beleuchtungsstrahlengang 40 (angedeutet durch seine optische Achse) mittels einer Optik 42 von einer Beleuchtungsvorrichtung 44 koaxial in den Beobachtungsstrahlengang 22 und somit in den Strahlengang des Arbeitslaserstrahls 14 eingekoppelt wird.

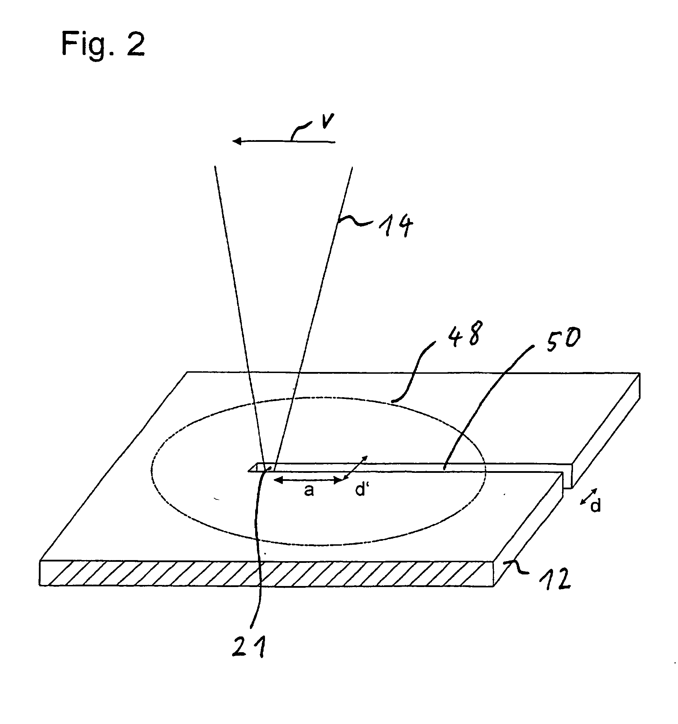

Die Beleuchtungsvorrichtung 44 weist zur Erzeugung des Beleuchtungslichts eine Lichtquelle 46 auf. Die Lichtquelle 46 der Beleuchtungsvorrichtung 44 ist dazu vorgesehen, einen Arbeitsbereich 48 auf dem Werkstück 12 auszuleuchten, in welchem der Arbeitslaserstrahl 14 auf das Werkstück 12 trifft und in der Wechselwirkungszone 21 dieses durchdringt, um einen Schnittspalt 50 in dem Werkstück 12 zu erzeugen, wie in Fig. 2 gezeigt ist. Die Ausleuchtung erfolgt hierbei vorzugsweise gleichmäßig, es ist jedoch für die Erfindung lediglich Voraussetzung, dass die Schnittspaltgeometrie hinreichend erfasst werden kann.

Für den Einsatz als Lichtquelle 46 eignen sich als Lichtquellen beispielsweise Halbleiterleuchtdioden oder LEDs, welche mit einem optischen Resonator versehen sind, wodurch die spontane Emission der Leuchtdiode durch den optischen Resonator verstärkt wird. Diese sogenannten RCLEDs (resonant cavity light emitting diodes) weisen im Unterschied zu normalen Halbleiterleuchtdioden ein stark verengtes Emissionsspektrum mit einer Halbwertsbreite oder FWHM (full width at half maximum) von etwa 5 bis 10 µm auf. Es ist jedoch auch denkbar, beispielsweise Xenonblitzlampen oder Quecksilberdampflampen mit einer hohen Abstrahlintensität zu verwenden, wobei der Wellenlängenbereich durch Filter entsprechend eingeschränkt wird.

Eine weitere mögliche Lichtquelle, die als Lichtquelle 46 der Beleuchtungsvorrichtung 44 eingesetzt werden kann, ist eine Laserlichtquelle. Die Laserlichtquelle ist ein Laser, dessen Strahl so aufgeweitet wird, dass das Laserlicht den Arbeitsbereich 48 zusammen mit dem Schnittspalt 50 ausleuchtet. Hierbei tritt in der Regel ein sogenanntes Speckle-Muster oder eine Granulation bei einer Beleuchtung der Oberfläche des Werkstücks 12 auf, welches bei einer kohärenten Beleuchtung der in der Regel optisch rauen Oberfläche (Unebenheiten in der Größenordnung der Wellenlänge des Laserlichts) des Werkstücks 12 im Fernfeld des reflektierten Lichts bei dessen Abbildung auf einer Kamera sichtbar wird. Solange jedoch der Verlauf des Schnittspaltes 50 oder dessen Breite hinreichend erfasst werden kann, ist der Einsatz von kohärentem Licht möglich.

Falls jedoch dieses Speckle-Muster eine zu starke Störung hervorruft, kann für eine Minimierung dieses Effekts entweder die Kohärenz des Laserlichts aufgelöst oder durch eine ausreichend schnelle, zeitliche Variation der Speckle-Interferenzen innerhalb der Integrationszeit des Auges oder der Kamera 32 der Speckle-Kontrast verringert werden. Hierbei kann beispielsweise das Laserlicht der Lichtquelle 46 durch einen rotierenden Diffusor (nicht gezeigt) geleitet werden. Als Diffusor eignet sich beispielsweise eine Glasplatte mit einer rauen Oberfläche. Sofern sich der Diffusor am Fokus des Laserstrahles der Lichtquelle 46 befindet, werden statistische Phasenvariationen in den Strahl eingefügt, während die räumliche Kohärenz erhalten bleibt. Sofern der unfokussierte Strahl durch den Diffusor geleitet wird, wird sowohl die räumliche als auch die zeitliche Kohärenz aufgelöst.

Eine weitere Möglichkeit der Auflösung der Kohärenz des Laserlichts der Lichtquelle 46 liegt in der Überlagerung von Laserlicht einer Vielzahl von unterschiedlichen Lasern, wodurch die resultierende Beleuchtung der Beleuchtungsvorrichtung 44 keine Kohärenzeffekte mehr aufweist und ein Speckle-Muster auf einer Oberfläche des Werkstücks 12 vermieden wird.

Die bevorzugte Abstrahlwellenlänge der Lichtquelle 46 der Beleuchtungsvorrichtung 44 liegt in einem Wellenlängenbereich zwischen 630 nm und 670 nm, wobei beispielsweise ein Intensitätsmaximum der Lichtquelle 46 bei 640 nm zweckmäßig ist.

Der Wellenlängendurchlassbereich des vor der Kamera 32 angeordneten optischen Bandpassfilters 36 ist vorzugsweise auf ein zumindest lokales Abstrahlmaximum der Lichtquelle 46 der Beleuchtungsvorrichtung 44 angepasst. Hierbei ist die Halbwertsbreite oder FWHM (full width at half maximum) des Wellenlängendurchlassbereichs des Filters 36 so zu wählen, dass gerade das Abstrahlmaximum der Lichtquelle 46 innerhalb des Durchlassbereichs des optischen Bandpassfilters 36 liegt. Die Halbwertsbreite ist vorzugsweise kleiner 100 nm, vorzugsweise kleiner 50 nm und insbesondere kleiner 20 nm. Der optische Bandpassfilter 36 ist vorzugsweise ein Fabry-Perot-Filter oder ein Fabry-Perot-Etalon, wobei durch diese Art von Filter elektromagnetische Wellen eines bestimmten Frequenzbereiches durchgelassen und die restlichen Frequenzanteile durch Interferenz ausgelöscht werden. Hinsichtlich der Halbwertsbreite des optischen Bandpassfilters 36 ist es von Vorteil, wenn dieser Bereich so schmal wie möglich ist, um bei einem Betrieb des Laserschneidkopfes 10 eine möglichst geringe Störung des Kamerabildes aufgrund von Reflektionen des Arbeitslaserstrahls 14 oder aufgrund der thermischen Strahlung der Schneiddampffackel zu verursachen, welches bei dem Schneidvorgang des Werkstücks 12 mittels des Arbeitslaserstrahls 14 durch Verdampfen des Werkstückmaterials entsteht. Es ist jedoch auch vorstellbar, statt des optischen Bandpassfilters 36 einen optischen Filter vorzusehen, welcher im Wesentlichen für den Arbeitslaserstrahl undurchlässig ist.

Es kann also durch eine Abstimmung der Lichtquelle 46 der Beleuchtungsvorrichtung 44 auf den Durchlassbereich des optischen Bandpassfilters 36 erreicht werden, dass das Werkstück 12 gleichmäßig ausgeleuchtet wird, wobei auch im Falle eines eingeschalteten Arbeitslaserstrahls 14 das Bild der Kamera 32 aufgrund des engen beobachteten Wellenlängenbereichs nicht gestört wird. Darüber hinaus kann es erfindungsgemäß vorgesehen sein, durch Modulation der Intensität der Lichtquelle 46 und anschließende Korrelation bei der Detektion durch die Kamera 32, also durch Einsatz eines Lock-in-Verfahrens, weitere Störeinflüsse bei der Aufnahme der durch die Lichtquelle 46 beleuchteten Werkstückoberfläche 12 durch die Kamera 32 zu eliminieren.

Die Kamera 32 kann als CMOS-Kamera oder CCD-Kamera ausgebildet sein, wobei diese erfindungsgemäß vorzugsweise eine Bildaufnahmevorrichtung umfasst, welche zur Verarbeitung der Bilddaten mittels eines HDR-Verfahrens ausgebildet ist. Bei diesem Verfahren werden unterschiedliche Bilder durch mehrfaches Abtasten eines bildgebenden Sensors oder durch simultane Bildaufnahme mit mehreren Kameras oder durch sequentielle Bildaufnahme mit einer Kamera, aber unterschiedlicher Belichtungszeit, genannt Multi-Exposure-Technik, erzeugt. Die Verrechnung der einzelnen Bildaufnahmen kann aus verschiedenen Verfahrensarten bestehen. Dazu gehört im einfachsten Fall das Aufaddieren und Ermitteln der einzelnen Bildwerte von mehreren Bildern einer Bildsequenz aus mindestens zwei Bildaufnahmen. Für eine bessere Bildgewinnung können die Bildwerte oder Pixel aus einer Bildsequenz aus mindestens zwei Bildaufnahmen gewichtet ermittelt werden. Als Gewichtungsverfahren kann entweder ein Entropie-Verfahren zur Gewichtung nach dem Informationsgehalt verwendet werden oder es kann eine gewichtete Ermittelung unter Berücksichtigung der Kamera-Antwort-Funktion durchgeführt werden. Dieses Vorgehen ermöglicht eine Bild-, Bildsequenz-, oder Videoaufnahme, die einen extrem hohen Dynamikbereich aufweist und somit gleichzeitig helle und dunkle Bereiche des Werkstücks auflösen kann. Somit können also gleichzeitig reflektierende als auch matte Bereiche der Werkstückoberfläche aufgenommen werden.

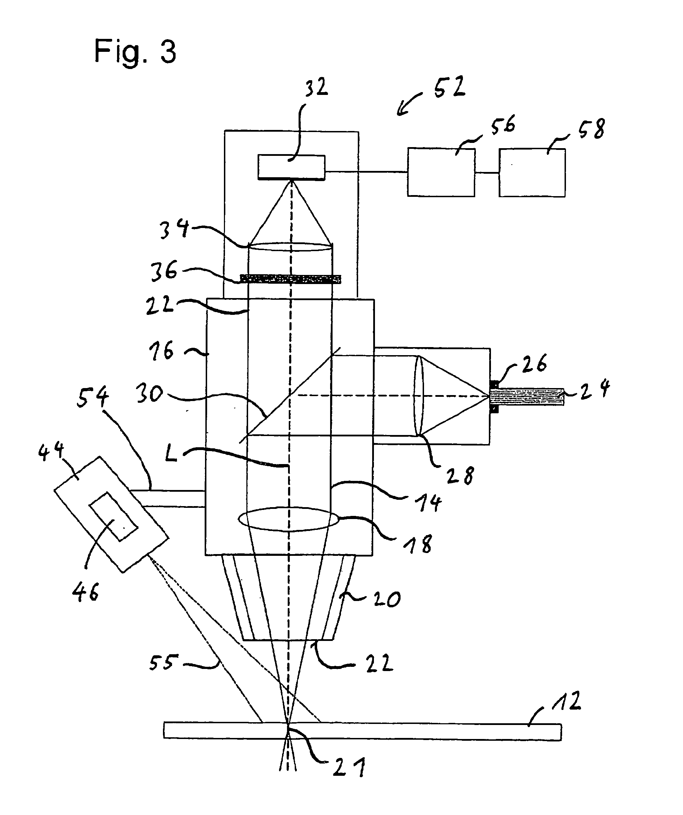

In Fig. 3 ist ein Laserschneidkopf 52 gemäß einem zweiten Ausführungsbeispiel der Erfindung dargestellt. Der Laserschneidkopf 52 des zweiten Ausführungsbeispiels entspricht im Wesentlichen dem in Fig. 1 gezeigten Laserbearbeitungskopf 10, wobei jedoch nur die Kamera 32, die Abbildungsoptik 34 und der optische Bandpassfilter 36 direkt dem ersten Strahlteiler 30 gegenüberliegen, wodurch der Beobachtungsstrahlengang 22 direkt in den Strahlengang des Arbeitslaserstrahls 14 eingekoppelt wird. Die Beleuchtungsvorrichtung 44 ist dabei über eine Halterung 54 an dem Gehäuse 16 angebracht, wodurch die Beleuchtung des Arbeitsbereichs des Werkstücks 12 nicht koaxial zum Arbeitslaserstrahl 14, sondern durch einen seitlich dazu eintreffenden Lichtkegel 55 erfolgt. Da bei einem Laserschneidvorgang die Düse 20 in der Regel sehr nah an dem Werkstück 12 entlang geführt wird, ist jedoch die Ausführungsform nach Fig. 1 bevorzugt, da bei der in Fig. 2 gezeigten Anordnung eine Abschattung des von der Lichtquelle 46 erzeugten Lichts durch die Schneiddüse 20 auftreten kann. Die Anordnung der Beleuchtungsvorrichtung 44 ist jedoch nicht auf die in Fig. 1 und Fig. 2 gezeigten Ausführungsformen beschränkt. So kann beispielsweise auch eine Beleuchtung durch eine Beleuchtungsvorrichtung erfolgen, die nicht mit dem Laserschneidkopf 10 oder 52 verbunden ist. So ist es beispielsweise vorstellbar, eine Seite des Werkstücks 12 zu beleuchten, die dem Laserschneidknopf 52 entgegengesetzt liegt. In diesem Falle erscheint der durch den Arbeitslaserstrahl 14 erzeugte Spalt 50 hell, da Licht, das von unten auf das Werkstück 12 scheint, durch den Schnittspalt 50 dringt.

Im Folgenden soll die Funktion des Laserbearbeitungskopfes 10 aus Fig. 1 und des Laserbearbeitungskopfes 52 aus Fig. 2 beschrieben werden. Mit der Kamera 32 ist, wie in den Figuren 1 und 2 gezeigt, eine Verarbeitungseinheit 56 verbunden, welche wiederum über eine Datenleitung mit einer Steuerungseinheit 58 verbunden ist.

Bei einem erfindungsgemäßen Laserschneidvorgang können die von der Kamera 32 aufgenommenen Bilddaten des Arbeitsbereiches 48 mit dem erzeugten Schnittspalt 50 dazu verwendet werden, den Laserschneidvorgang so zu regeln, dass eine aktuelle Breite d' des Schnittspaltes 50 auf einen vorgegebenen Wert d (Fig. 2) geregelt wird. Es ist jedoch auch vorstellbar, erfindungsgemäß die aktuelle Breite d' des Schnittspaltes 50 nur zu überwachen, um Fehler bei einem Laserschneidprozess festzustellen. Schließlich kann der Wert der Breite d' an eine komplexe Steuerungsvorrichtung übergeben werden, die mittels einer Vielzahl von Parametern einen Laserschneidprozess regelt, überwacht oder steuert.

Für einen Regelungs- oder Überwachungsprozess werden durch die Verarbeitungseinheit 56 mittels digitaler Bildverarbeitung die durch die Kamera 32 aufgenommenen Graubilder dahingehend ausgewertet, dass die aktuelle Breite d' des Schnittspaltes 50 bestimmt wird. Die Ermittlung der Breite d' des Schnittspaltes 50 erfolgt vorzugsweise unmittelbar nach Erzeugen des Schnittspaltes, also in einem Abstand a von kleiner 50 mm, vorzugsweise kleiner 30 mm und insbesondere kleiner 10 mm nach der Wechselwirkungszone 21, also nach dem Durchdringungspunkt des Laserstrahls 14 durch das Werkstück 12. Die Breite des Schnittspaltes 50 ist also die Länge des Lotes durch den dunkel erscheinenden Spalt 50 in einem vorbestimmten Abstand a von der Wechselwirkungszone 21. Der Wert der Breite des Schnittspaltes 50 kann in Pixeln des Kamerasensors oder nach Kalibrierung in mm angegeben sein. Es ist jedoch auch möglich und sogar bevorzugt, die aktuelle Breite d' direkt in der Wechselwirkungszone 21 zu messen (wobei a = 0 ist). Der aktuelle Wert d' der Breite des Schnittspaltes 50 wird durch Einsatz von Aktoren auf den vorgegebenen Wert d geregelt. Als Regelungsparameter für das Einstellen einer gleichmäßigen Spaltschnittbreite d können beispielsweise der Schneidgasdruck des Schneidgases, welches durch die Düse 20 in Richtung des Werkstücks 12 heraustritt, oder die Vorschubgeschwindigkeit v des Laserschneidkopfes 10 oder 52 verwendet werden. Weitere Prozessparameter sind beispielsweise der Abstand des Laserschneidkopfes 10 oder 52 zur Werkstückoberfläche, also die Fokuslage des Laserstrahls 14 innerhalb des Werkstücks 12, oder die Laserstrahlleistung. Während des Laserschneidvorganges kann auch ein Lernvorgang durch neuronale Netze eingesetzt werden, wobei eine Vielzahl von Prozessparametern durch die Steuerungseinheit 58 aufgenommen werden und entsprechende erlernte Aktorikvorgänge durchgeführt werden, um entweder die Schnittspaltbreite auf einem optimalen Wert d zu halten oder allgemein einen optimierten Laserschneidprozess auszuführen.

Erfindungsgemäß umfasst also das Verfahren zum Schneiden eines Werkstücks mittels des erfindungsgemäßen Laserschneidkopfes die Schritte des Aufnehmens eines Graubildes des Arbeitsbereiches 48 durch die Kamera 32 und des Ermittelns der aktuellen Breite d' des Schnittspaltes 50 auf der Basis des durch die Kamera 32 aufgenommenen Graubildes des Arbeitsbereiches 48 in einem vorbestimmten Abstand a von der Wechselwirkungszone 21 zwischen Werkstück 12 und Arbeitslaserstrahl 14 oder direkt in der Wechselwirkungszone 21 selbst. Ein auf diesem Verfahren aufbauender Regelungsprozess umfasst das Erfassen von aktuellen Prozessparametern wie Schneidgasdruck, Vorschubgeschwindigkeit, Fokuslage oder Laserleistung des Laserschneidkopfes 10, 52 und das Einstellen der Prozessparameter durch die Steuerungseinheit 58, um die aktuelle Breite d' des Schnittspaltes 50 auf einen vorgegebenen Wert d zu steuern und insbesondere zu regeln.

Durch die Erfindung wird eine Vorrichtung oder ein Laserschneidkopf und ein Verfahren zum Schneiden eines Werkstücks mittels einer Vorrichtung oder eines Laserschneidkopfes geschaffen, bei welcher oder welchem nicht ein Prozessleuchten oder Reflektionen des Arbeitslaserstrahls genutzt werden, um die Qualität eines Laserbearbeitungsvorgangs zu beurteilen, sondern bei welcher oder welchem die Werkstückoberfläche mit Fremdlicht beleuchtet und durch eine Kamera aufgenommen wird, um aus den aufgenommenen Bilddaten die Spaltgeometrie und insbesondere die Spaltbreite zu ermitteln. Die ermittelte Spaltbreite kann dann auf einen vorgegebenen Wert geregelt werden, um einen verbesserten Laserschneidvorgang zu ermöglichen. Es ist jedoch auch möglich, die ermittelte Spaltbreite als Kontrollwert für die Überwachung des Laserschneidvorgangs zu verwenden oder den ermittelten Spaltbreitenwert in einen Steuerungsprozess eingehen zu lassen.

## Patentansprüche

1. Vorrichtung (10, 52, 56) zum Schneiden eines Werkstücks (12) mittels eines Arbeitslaserstrahls (14), mit
- einem Gehäuse (16), durch das ein Strahlengang für den Arbeitslaserstrahl (14) hindurchgeführt ist und das eine Fokussieroptik (18) zum Fokussieren des Arbeitslaserstrahls (14) auf das zu schneidende Werkstück (12) innerhalb eines Arbeitsbereichs (48) aufweist,
- einer koaxial in den Arbeitslaserstrahlengang eingekoppelten Kamera (32) zur Beobachtung des Arbeitsbereichs (48) des zu schneidenden Werkstücks (12), und
- einer Verarbeitungseinheit (56), die dazu ausgebildet ist, Bilddaten von der Kamera (32) zu verarbeiten, um die Geometrie eines in dem Werkstück (12) durch den Arbeitslaserstrahl (14) erzeugten Schnittspaltes (50) und die Qualität desselben zu bestimmen, **gekennzeichnet durch**
- eine Beleuchtungsvorrichtung (44) mit einer Lichtquelle (46) zur inkohärenten Beleuchtung des Arbeitsbereichs (48) des zu schneidenden Werkstücks (12),
wobei in dem Beobachtungsstrahlengang (22) vor der Kamera (32) ein optischer Filter angeordnet ist, welcher für den Arbeitslaserstrahl (14) im Wesentlichen undurchlässig ist, und
wobei der optische Filter ein optischer Bandpassfilter (36) ist und die Lichtquelle (46) der Beleuchtungsvorrichtung (44) so beschaffen ist, dass diese ein zumindest lokales Abstrahlmaximum im Wellenlängendurchlassbereich des Bandpassfilters (36) aufweist, um eine Aufnahme eines Graubildes des Arbeitsbereichs (48) **durch** die Kamera (32) zu ermöglichen, bei dem sowohl Reflexionen **durch** den Arbeitslaserstrahl (14) als auch Emissionen des Materialdampfes des Werkstücks (12) minimiert sind.

2. Vorrichtung (10, 52, 56) nach Anspruch 1, **dadurch gekennzeichnet, dass** die Verarbeitungseinheit (56) dazu ausgebildet ist, Bilddaten von der Kamera (32) zu verarbeiten, um eine aktuelle Breite (d') des Schnittspaltes (50) zu bestimmen.

3. Vorrichtung (10, 52, 56) nach Anspruch 1 oder 2, ferner mit einer Schneiddüse (20), durch welche der Arbeitslaserstrahl (14) und der Beobachtungsstrahlengang (22) der Kamera (32) verlaufen und durch welche ein Schneidgas geleitet wird, wodurch bei einem Schneidvorgang ein durch den Arbeitslaserstrahl (14) aufgeschmolzenes Material des zu schneidenden Werkstücks (12) nach unten aus dem Schnittspalt (50) geblasen wird.

4. Vorrichtung (10, 52, 56) nach Anspruch 1, 2 oder 3, ferner mit einem ersten Strahlteiler (30), durch welchen der Beobachtungsstrahlengang (22) der Kamera (32) koaxial in den Arbeitslaserstrahlengang einkoppelbar ist.

5. Vorrichtung (10, 56) nach Anspruch 4, ferner mit einem zweiten Strahlteiler (38), der im Beobachtungsstrahlengang (22) zwischen dem ersten Strahlteiler (30) und der Kamera (32) angeordnet ist, durch welchen die Beleuchtung der Beleuchtungsvorrichtung (44) koaxial in den Arbeitslaserstrahlengang einkoppelbar ist.

6. Vorrichtung (52, 56) nach einem der Ansprüche 1 bis 4, **dadurch gekennzeichnet, dass** die Beleuchtungsvorrichtung (44) an einer Außenseite des Gehäuses (16) befestigt ist, um den Arbeitsbereich (48) des Werkstücks (12) gleichmäßig zu beleuchten.

7. Vorrichtung (10, 52, 56) nach Anspruch 1, **dadurch gekennzeichnet, dass** der optische Bandpassfilter (36) ein Interferenzfilter, insbesondere ein Fabry-Perot-Filter ist.

8. Vorrichtung (10, 52, 56) nach einem der vorstehenden Ansprüche, **dadurch gekennzeichnet, dass** der optische Bandpassfilter (36) einen Wellenlängendurchlassbereich aufweist, dessen Halbwertsbreite kleiner 50 nm, inbesondere kleiner 20 nm ist.

9. Vorrichtung (10, 52, 56) nach einem der vorstehenden Ansprüche, **dadurch gekennzeichnet, dass** die Lichtquelle (46) der Beleuchtungsvorrichtung (44) eine Xenonblitzlampe oder eine Quecksilberdampflampe ist.

10. Vorrichtung (10, 52, 56) nach Anspruch 1 bis 8, **dadurch gekennzeichnet, dass** die Lichtquelle (46) der Beleuchtungsvorrichtung (44) zumindest eine LED, insbesondere eine RCLED oder zumindest ein Laser ist.

11. Vorrichtung (10, 52, 56) nach einem der Ansprüche 1 bis 8, **dadurch gekennzeichnet, dass** die Lichtquelle (46) der Beleuchtungsvorrichtung (44) zumindest einen Laser und an dessen Strahlausgangsseite einen zeitlich variierenden Diffusor aufweist, durch welchen das durch den Laser erzeugte Laserlicht läuft, um die Kohärenz des Laserlichts aufzulösen.

12. Vorrichtung (10, 52, 56) nach einem der Ansprüche 1 bis 8, **dadurch gekennzeichnet, dass** die Lichtquelle (46) der Beleuchtungsvorrichtung (44) eine Vielzahl von Lasern aufweist, deren Laserlicht so überlagert wird, dass die resultierende Beleuchtung der Beleuchtungsvorrichtung (44) inkohärentes Licht ergibt.

13. Vorrichtung (10, 52, 56) nach einem der vorstehenden Ansprüche, **dadurch gekennzeichnet, dass** die Kamera (32) eine Bildaufnahme Vorrichtung umfasst, welche zur Verarbeitung der Bilddaten mittels eines HDR-Verfahrens ausgebildet ist.

14. Vorrichtung (10, 52, 56) nach einem der vorstehenden Ansprüche, ferner mit einer Steuerungseinheit (58), welche dazu ausgebildet ist, während eines Schneidprozesses Prozessparameter wie Schneidgasdruck und Vorschubgeschwindigkeit der Vorrichtung (10, 52, 56) so einzustellen, dass die aktuelle Breite (d') des Schnittspaltes (50) auf einen vorgegebenen Wert (d) geregelt wird.

15. Verfahren zum Schneiden eines Werkstücks mittels einer Vorrichtung (10, 52, 56) nach einem der vorstehenden Ansprüche, mit den Schritten
- Aufnehmen eines Graubildes des Arbeitsbereichs (48) durch die Kamera (32),
- Ermitteln der aktuellen Breite (d') des Schnittspaltes (50) auf Basis des durch die Kamera aufgenommenen Graubildes des Arbeitsbereiches (48).

16. Verfahren nach Anspruch 15, ferner mit den Schritten:
- Erfassen von aktuellen Prozessparametern der Vorrichtung (10, 52, 56), wie Schneidgasdruck, Vorschubgeschwindigkeit, Fokuslage und Laserstrahlleistung der Vorrichtung (10, 52, 56),
- Einstellen der Prozessparameter, um die aktuelle Breite (d') des Schnittspaltes (50) auf einen vorgegebenen Wert (d) zu steuern oder zu regeln.

## Claims

1. A device (10, 52, 56) for cutting a workpiece (12) by means of a working laser beam (14), comprising
- a housing (16) through which a beam path for the working laser beam (14) is guided, and which has a focusing optics (18) for focusing the working laser beam (14) onto the workpiece (12) to be cut within a working area (48),
- a camera (32), coupled coaxially into the working laser beam path, for observing the working area (48) of the workpiece (12) to be cut, and
- a processing unit (56) that is designed to process image data from the camera (32) in order to determine the geometry and the quality of a cut slit (50) produced in the workpiece (12) by the working laser beam (14),
**characterized by**
- an illumination device (44) with a light source (46) for the incoherent illumination of the working area (48) of the workpiece (12) to be cut, and
- an optical filter that is substantially opaque to the working laser beam (14) being arranged in the observation beam path (22) upstream of the camera (32),
the optical filter being an optical bandpass filter (36) and the light source (46) of the illumination device (44) being such that it has an at least local emission maximum in the wavelength passband of the bandpass filter (36), in order to enable the camera (32) to record a grayscale image of the working area (48), in which both reflections by the working laser beam (14) and emissions of the material vapor of the workpiece (12) are minimized.

2. The device (10, 52, 56) as claimed in claim 1, **characterized in that** the processing unit (56) is designed to process image data from the camera (32) in order to determine a current width (d') of the cut slit (50).

3. The device (10, 52, 56) as claimed in claim 1 or 2, further comprising a cutting nozzle (20) through which the working laser beam (14) and the observation beam path (22) of the camera (32) run and through which a cutting gas is led, as a result of which during a cutting operation a material of the workpiece (12) to be cut that is fused by the working laser beam (14) is blown downward from the cut slit (50).

4. The device (10, 52, 56) as claimed in claim 1, 2 or 3, further comprising a first beam splitter (30) by which the observation beam path (22) of the camera (32) can be coupled coaxially into the working laser beam path.

5. The device (10, 56) as claimed in claim 4, further comprising a second beam splitter (38), which is arranged in the observation beam path (22) between the first beam splitter (30) and the camera (32), by which the illumination of the illumination device (44) can be coupled coaxially into the working laser beam path.

6. The device (52, 56) as claimed in one of claims 1 to 4, **characterized in that** the illumination device (44) is fastened on an outer side of the housing (16) in order to illuminate the working area (48) of the workpiece (12) uniformly.

7. The device (10, 52, 56) as claimed in claim 1, **characterized in that** the optical bandpass filter (36) is an interference filter, in particular a Fabry-Perot filter.

8. The device (10, 52, 56) as claimed in one of the preceding claims, **characterized in that** the optical bandpass filter (36) has a wavelength passband whose half value width is smaller than 50 nm, in particular smaller than 20 nm.

9. The device (10, 52, 56) as claimed in one of the preceding claims, **characterized in that** the light source (46) of the illumination device (44) is a xenon flash lamp or a mercury vapor lamp.

10. The device (10, 52, 56) as claimed in claims 1 to 8, **characterized in that** the light source (46) of the illumination device (44) is at least an LED, in particular an RCLED, or at least a laser.

11. The device (10, 52, 56) as claimed in one of claims 1 to 8, **characterized in that** the light source (46) of the illumination device (44) has at least one laser and, on the beam outlet side thereof, a temporally varying diffuser through which the laser light generated by the laser runs, in order to ressolve the coherence of the laser light.

12. The device (10, 52, 56) as claimed in one of claims 1 to 8, **characterized in that** the light source (46) of the illumination device (44) has a multiplicity of lasers whose laser light is superposed such that the resulting illumination of the illumination device (44) gives rise to incoherent light.

13. The device (10, 52, 56) as claimed in one of the preceding claims, **characterized in that** the camera (32) comprises an image recording device which is designed to process the image data by means of an HDR method.

14. The device (10, 52, 56) as claimed in one of the preceding claims, further comprising a control unit (58) that is designed to set process parameters, such as cutting gas pressure and feedrate of the device (10, 52, 56) during a cutting process such that the current width (d') of the cut slit (50) is regulated to a prescribed value (d).

15. A method for cutting a workpiece by means of a device (10, 52, 56) as claimed in one of the preceding claims, comprising the steps of
- recording a grayscale image of the working area (48) by the camera (32), and
- determining the current width (d') of the cut slit (50) on the basis of the grayscale image of the working area (48) recorded by the camera.

16. The method as claimed in claim 15, further comprising the steps of:
- acquiring current process parameters of the device (10, 52, 56), such as cutting gas pressure, feedrate, focal position and laser beam power of the device (10, 52, 56), and
- setting the process parameters in order to control or to regulate the current width (d') of the cut slit (50) to a prescribed value (d).

## Revendications

1. Appareil (10, 52, 56) pour couper une pièce à oeuvrer (12) au moyen d'un rayon laser de travail (14), comprenant
- un boîtier (16), à travers lequel est passé un trajet de rayonnement pour le rayon laser de travail (14) et qui comprend une optique de focalisation (18) pour focaliser le rayon laser de travail (14) sur la pièce à oeuvrer à couper (12) à l'intérieur d'une zone de travail (48),
- une caméra (32) couplée coaxialement dans le trajet du rayon laser de travail pour observer la zone de travail (48) de la pièce à oeuvrer à couper (12), et
- une unité de traitement (56), qui est réalisée pour traiter les données images de la caméra (32) afin de déterminer la géométrie d'une fente de coupe (50) engendrée par le rayon laser de travail (14) dans la pièce à oeuvrer (12) et la qualité de cette fente de coupe,
**caractérisé par**
- un dispositif d'éclairage (44) comprenant une source de lumière (46) pour éclairer la zone de travail (48) de la pièce à oeuvrer à couper (12) avec une lumière incohérente,
dans lequel, dans le trajet du rayon d'observation (22) devant la caméra (32), est agencé un filtre optique qui est sensiblement opaque pour le rayon laser de travail (14), et
dans lequel le filtre optique est un filtre optique passe-bande (36) et la source de lumière (46) du dispositif d'éclairage (44) est conçue de telle façon que celle-ci présente un maximum de rayonnement au moins local dans la plage des longueurs d'onde passantes du filtre passe-bande (36), pour permettre une prise d'une image de gris de la zone de travail (48) au moyen de la caméra (32), dans laquelle aussi bien des réflexions à travers le rayon laser de travail que des émissions de vapeur du matériau de la pièce oeuvrer (12) sont minimisées.

2. Appareil (10, 52, 56) selon la revendication 1, **caractérisé en ce que** l'unité de traitement (56) est réalisée pour traiter des données images de la caméra (32) afin de déterminer une largeur actuelle (d') de la fente de coupe (50).

3. Appareil (10, 52, 56) selon la revendication 1 ou 2, comprenant en outre une buse de coupe (20) à travers laquelle passent le rayon laser de travail (14) et le trajet du rayon d'observation (22) de la caméra (32), et à travers laquelle est passé un gaz de coupe, au moyen duquel, lors d'une opération de coupe, un matériau, amené en fusion par le rayon laser de travail (14), de la pièce à oeuvrer à couper (12) est soufflé vers le bas hors de la fente de coupe (50).

4. Appareil (10, 52, 56) selon la revendication 1, 2 ou 3, comprenant en outre un premier diviseur de rayon (30) au moyen duquel le trajet du rayon d'observation (22) de la caméra (32) est susceptible d'être couplé coaxialement dans le trajet du rayon laser de travail.

5. Appareil (10, 56) selon la revendication 4, comprenant en outre un second diviseur de rayon (38), qui est agencé dans le trajet du rayon d'observation (22) entre le premier diviseur de rayon (30) et la caméra (32), au moyen duquel l'éclairage du dispositif d'éclairage (44) est susceptible d'être couplé coaxialement dans le trajet du rayon laser de travail.

6. Appareil (52, 56) selon l'une d'revendication 1 à 4, **caractérisé en ce que** le dispositif d'éclairage (44) est fixé sur une face extérieure du boîtier (16), afin d'éclairer régulièrement la zone de travail (48) de la pièce à oeuvrer (12).

7. Appareil (10, 52, 56) selon la revendication 1, **caractérisé en ce que** le filtre passe-bande optique (36) est un filtre à interférence, en particulier un filtre de Fabry-Perot.

8. Appareil (10, 52, 56) selon l'une des revendications précédentes, **caractérisé en ce que** le filtre passe-bande optique (36) présente une plage de longueur d'onde passante dont la demi-largeur est inférieure à 50 nm, en particulier inférieur à 20 nm.

9. Appareil (10, 52, 56) selon l'une des revendications précédentes, **caractérisé en ce que** la source de lumière (46) du dispositif d'éclairage (44) est une lampe flash au néon ou une lampe à vapeur de mercure.

10. Appareil (10, 52, 56) selon les revendications 1 à 8, **caractérisé en ce que** la source de lumière (46) du dispositif d'éclairage (44) est au moins une diode électroluminescente (LED), en particulier une RCLED, ou au moins un laser.

11. Appareil (10, 52, 56) selon l'une des revendications 1 à 8, **caractérisé en ce que** la source de lumière (46) du dispositif d'éclairage (44) comprend au moins un laser et, du côté de la sortie de son rayon, un diffuseur à variation temporelle, à travers le lequel passe la lumière laser engendrée par le laser afin de briser la cohérence de la lumière laser.

12. Appareil (10, 52, 56) selon l'une des revendications 1 à 8, **caractérisé en ce que** la source de lumière (46) du dispositif d'éclairage (44) comprend une pluralité de lasers, dont la lumière laser est superposée de telle façon que l'éclairage résultant du dispositif d'éclairage (44) produit une lumière incohérente.

13. Appareil (10, 52, 56) selon l'une des revendications précédentes, **caractérisé en ce que** la caméra (32) comprend un dispositif de prise d'images, qui est réalisé pour traiter les données images au moyen d'un procédé HDR.

14. Appareil (10, 52, 56) selon l'une des revendications précédentes, comprenant en outre une unité de commande (58) qui est réalisée, pendant un processus de coupe, pour régler des paramètres du processus, tels que la pression du gaz de coupe et la vitesse d'avance de l'appareil (10, 52, 56) de telle façon que la largeur actuelle (d') de la fente de coupe (50) est régulée à une valeur prédéterminée (d).

15. Procédé pour la coupe d'une pièce à oeuvrer au moyen d'un appareil (10, 52, 56) selon l'une des revendications précédentes, comprenant les étapes suivantes :
- prise d'une image de gris de la zone de travail (48) par la caméra (32),
- détermination de la largeur actuelle (d') de la fente de coupe (50) sur la base de l'image de gris, prise par la caméra, de la zone de travail (48).

16. Procédé selon la revendication 15, comprenant en outre les étapes suivantes :
- détection des paramètres de processus actuels de l'appareil (10, 52, 56), comme la pression du gaz de coupe, la vitesse d'avance, la position du foyer et la puissance du rayon laser de l'appareil (10, 52, 56),
- réglage des paramètres du processus afin de commander ou de réguler la largeur actuelle (d') de la fente de coupe (50) à une valeur prédéterminée (d).
